# EUROPÄISCHE PATENTSCHRIFT

(11) **EP 2 176 099 B1**
(45) Veröffentlichungstag und Bekanntmachung des Hinweises auf die Patenterteilung: **15.08.2012**
(21) Anmeldenummer: 08760664.6
(22) Anmeldetag: 06.06.2008
(51) Int. Cl.: B60S 1/34

(54) **SCHUTZKAPPE**
PROTECTIVE CAP
CAPOT DE PROTECTION

(30) Priorität: 06.08.2007 DE 102007037042
(43) Veröffentlichungstag der Anmeldung: 21.04.2010
(73) Patentinhaber: Robert Bosch GmbH, 70442 Stuttgart (DE)
(72) Erfinder: REITH, Michael, 77815 Buehl-Vimbuch (DE); LIPPS, Verena, 77833 Ottersweier (DE); GEUBEL, Paul, 76534 Baden-Baden (DE)
(86) Internationale Anmeldenummer: PCT/EP2008/057094
(87) Internationale Veröffentlichungsnummer: WO 2009/019058

(56) Entgegenhaltungen:
- EP-A- 1 837 256
- WO-A-2007/080008
- WO-A-2008/071491
- DE-A1- 4 322 429
- DE-C1- 4 037 707

## Beschreibung

### Stand der Technik

Die Erfindung geht von einer Schutzkappe nach dem Oberbegriff des Anspruchs 1 aus.

Derartige Schutzkappen dienen dazu, einen Lagerspalt zwischen einer Antriebs- bzw. Abtriebswelle und einem zugehörigen Lagergehäuse, insbesondere für Wischeranlagen, nach außen gegen Schmutz und Spritzwasser abzuschirmen. Hierbei handelt es sich in der Regel um die Abtriebswellen eines oder mehrerer Wischermotoren und/oder die Antriebswellen der Wischerarme. Im Folgenden sind mit Abtriebswellen sowohl diese als auch Antriebswellen gemeint. Häufig sind im Bereich der Schutzkappe Dichtringe vorgesehen, um die Spalte zwischen der Schutzkappe und angrenzenden Bauteilen, z.B. der Abtriebswelle und/oder dem Lagergehäuse abzudichten. Aus der DE 198 04 135 A1 ist ein Wischerlager mit einer Schutzkappe bekannt, bei der zwischen der Schutzkappe und dem Lagergehäuse ein Dichtring vorgesehen ist. Außerdem ist zwischen einem Anlaufring und einer Stirnfläche des Lagergehäuses ein Dichtring in einer Aussparung angeordnet.

Ferner sind Schutzkappen für Abtriebswellen bekannt, bei denen im Bereich der Durchgangsöffnung für die Abtriebswelle ein radial wirkender O-Ring vorgesehen ist, der zwischen einem Kragen der Schutzkappe und einer Klemmscheibe bzw. einer Buchse in seiner richtigen Position gehalten wird. Die Buchse ist durch Ultraschallschweißen in der Schutzkappe befestigt. Die Klemmscheibe bzw. die Buchse besitzt nur eine relativ geringe Erstreckung in Längsrichtung, sodass der Dichtring bei der Montage durch das Ende der Abtriebswelle aus seiner Position gedrückt oder beschädigt werden kann, wenn die Schutzkappe verkantet auf die Abtriebswelle aufgesetzt wird.

Eine gattungsgemäße Vorrichtung mit einer Abtriebswelle (14) und einer Schutzkappe (16) ist aus dem Dokument WO-A-2007/080008 bekannt.

### Offenbarung der Erfindung

Durch die kennzeichnenden Merkmale wird die Schutzkappe relativ zur Abtriebswelle zentriert, wenn ihr Ende und insbesondere ihr Gewindezapfen den Dichtring passieren. Somit werden Verlagerungen des Dichtrings und Beschädigungen vermieden.

Erfindungsgemäß wird das dadurch erreicht, dass die Länge der Buchse länger ist als der Konus mit dem Gewindezapfen. Dadurch erreicht der zylindrische Teil der Abtriebswelle mit dem maximalen Durchmesser die Buchse, bevor der Gewindezapfen den Dichtring erreicht. Bei einer weiteren Ausgestaltung der Erfindung kann das Führungselement aus einer Führungsbuchse bestehen, die in einem Abstand von einer ersten, kurzen Buchse angeordnet ist, wobei der Abstand so groß gewählt ist, dass der Abstand der voneinander abgewandten Stirnseiten der Buchse und der Führungsbuchse größer ist als die Länge des Konus mit dem Gewindezapfen.

Um diesen Abstand zu gewährleisten, ist es zweckmäßig, dass die Führungsbuchse über Längsstege mit der Buchse einstückig verbunden ist. Dabei ist es vorteilhaft, wenn die Längsstege mit dem inneren Umfang der Buchse und der Führungsbuchse bündig abschließen, sodass sie bei der Führungsfunktion mitwirken.

### Kurze Beschreibung der Zeichnungen

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Teillängsschnitt durch eine Schutzkappe nach dem Stand der Technik,
- Fig. 2: einen Teillängsschnitt durch eine erfindungsgemäße Schutzkappe
- Fig. 3: eine Variante zu Fig. 2,
- Fig. 4: einen Querschnitt durch eine erfindungsgemäße Schutzkappe entsprechend der Linie IV-IV und
- Fig. 5: eine Variante zu Fig. 4.

### Ausführungsformen der Erfindung

Eine Abtriebswelle 10 ist in einem nicht dargestellten Lagergehäuse um eine Rotationsachse 18 drehbar oder schwenkbar gelagert. Zum Schutz der Lagerspalte wird auf das Ende der Abtriebswelle 10 eine Schutzkappe 16 geschoben. Diese besitzt an einer Stirnseite eine Öffnung 40, aus der die Abtriebswelle 10 mit ihrem Konus 12 und ihrem Gewindezapfen 14 herausragt. Der Gewindezapfen 14 schließt mit einer Montageschräge 22 ab.

Die Öffnung 40 wird von einem Kragen 24 umfasst, der eine Anlageschulter für einen Dichtring 26 bildet. Die gegenüberliegende Anlageschulter wird von einer Buchse 28 gebildet, die von dem der Öffnung 40 abgewandten Ende der Schutzkappe 16 in diese eingesetzt wird und mit ihr durch Ultraschallschweißen fest verbunden wird. Die Schutzkappe 16 und die Buchse 28 werden zweckmäßigerweise als Spritzgussteil aus Kunststoff gefertigt.

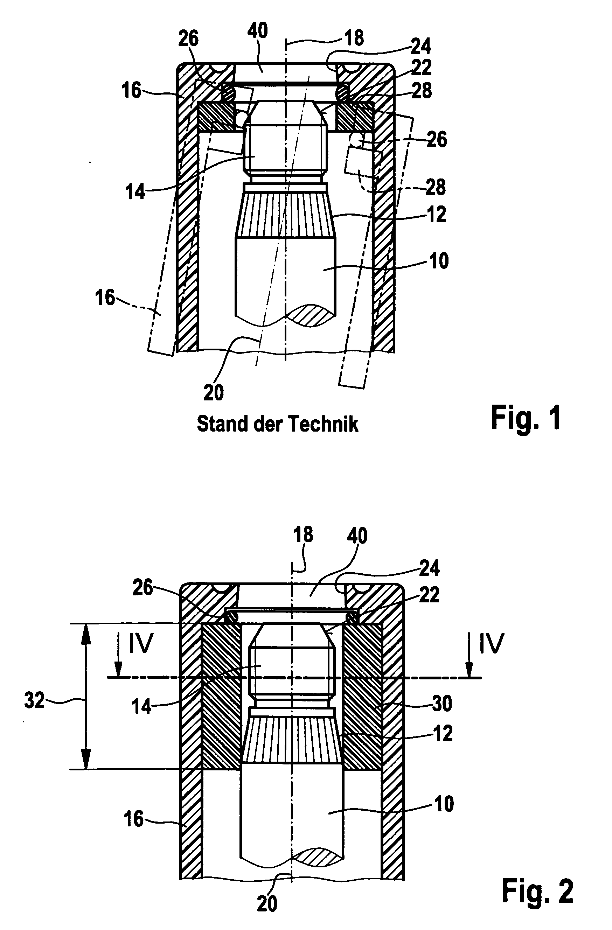

Wird die Schutzkappe 16 bei der Montage gekippt auf das Ende der Abtriebswelle 10 gesteckt, sodass ihre Längsachse 20 mit der Rotationsachse 18 der Abtriebswelle einen Winkel einschließt, besteht die Gefahr, dass eine Kante, z.B. zwischen der Montageschräge 22 und dem Gewindeteil des Gewindezapfens 14, den Dichtring 26 aus seiner Lage herausdrückt oder ihn beschädigt. In Fig. 1 ist eine solche Stellung der Schutzkappe 16 strichpunktiert eingezeichnet.

Bei der erfindungsgemäßen Schutzkappe 16 nach dem Ausführungsbeispiel nach Fig. 2 ist eine längere Buchse 30 vorgesehen, wobei die Länge 32 der Buchse 30 so gewählt ist, dass sie länger ist als der Konus 12 und der Gewindezapfen 14 der Abtriebswelle 10. Die Buchse 30 übernimmt dabei die Funktion der Anlageschulter und eines Führungselements. Damit ist gewährleistet, dass der zylindrische Teil der Abtriebswelle 10 bereits durch die Buchse 30 zentriert und geführt wird, bevor die Montageschräge 22 den Dichtring 26 erreicht. Da durch die Führung der Schutzkappe 16 ihre Längsachse 20 und die Rotationsachse 18 der Abtriebswelle 10 zusammenfallen, kann der Dichtungsring 26 nicht mehr beschädigt werden.

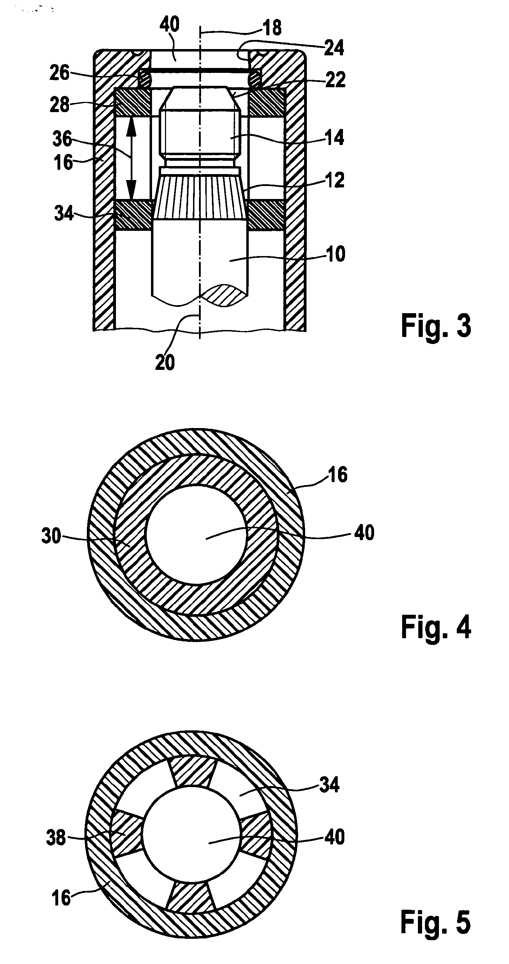

Bei dem Ausführungsbeispiel nach Fig. 3 sind anstelle einer langen Buchse 30 zwei kurze Buchsen 28, 34 vorgesehen, die in einem Abstand 36 voneinander montiert sind, und zwar so, dass die voneinander abgewandten Stirnflächen der Buchse 28 und der Führungsbuchse 34 einen größeren Abstand aufweisen als die Länge des Konus 12 und des Gewindezapfens 14. Die kurze Buchse 28 übernimmt die Funktion einer Anlageschulter, während die Führungsbuchse 34 die Führungsfunktion übernimmt. Dadurch wird der gleiche Zweck erreicht wie bei dem Ausführungsbeispiel nach Fig. 2.

Um den Abstand 36 zwischen der kurzen Buchse 28 und der Führungsbuchse 34 zu gewährleisten, sind bei dem Ausführungsbeispiel nach Fig. 5 die Buchse 28 und die Führungsbuchse 34 durch Längsstege 38 miteinander einstückig verbunden. Dies verringert trotz eines geringen Materialeinsatzes die Teilevielfalt. Außerdem wird die Montage gegenüber dem Ausführungsbeispiel nach Fig. 3 erleichtert. Zweckmäßigerweise schließen die Längsstege 38 nach innen bündig mit der Buchse 28 und der Führungsbuchse 34 ab, wodurch sie eine zusätzliche Führungsfunktion übernehmen können. Die aus Kunststoff gefertigten Buchsen 28, 30, 34 werden in vorteilhafter Weise durch Ultraschallschweißen in der Schutzkappe 16 befestigt.

## Patentansprüche

1. Vorrichtung mit einer Abtriebswelle (14) und einer Schutzkappe (16) für das freie Ende der Abtriebswelle (10) wobei die Abtriebswelle (10) einen Konus (12) und einen Gewindezapfen (14) aufweist, und die Schutzkappe (16) an der nach außen weisenden Stirnseite eine Öffnung (40) besitzt, an die sich radial nach außen ein Kragen (24) anschließt, der eine Schulter für einen radial wirkenden Dichtring (26) bildet, während die gegenüberliegende Schulter von einer in die Schutzkappe (16) eingesetzten Buchse (30) gebildet wird, die in der Schutzkappe (16) befestigt ist, **dadurch gekennzeichnet, dass** die Länge (32) der Buchse (30) länger ist als der Konus (12) mit dem Gewindezapfen (14).

2. Vorrichtung nach Anspruch, 1, **dadurch gekennzeichnet, dass** die Buchse (30) eine Führungsbuchse (34) und eine erste Buchse (28) aufweist, wobei die Führungsbuchse (34) in einem Abstand (36) von der ersten Buchse (28) angeordnet und der Abstand (36) so groß gewählt ist, dass der Abstand der voneinander abgewandten Stirnseiten der ersten Buchse (28) und der Führungsbuchse (34) größer ist als die Länge des Konus (12) mit dem Gewindezapfen (14).

3. Vorrichtung nach Anspruch 2, **dadurch gekennzeichnet, dass** die Führungsbuchse (34) über Längsstege (38) mit der ersten Buchse (28) einstückig verbunden ist.

4. Vorrichtung nach Anspruch 3, **dadurch gekennzeichnet, dass** die Längsstege (38) mit dem inneren Umfang der ersten Buchse (28) und der Führungsbuchse (34) bündig abschließen.

## Claims

1. Device with an output shaft (10) and with a protective cap (16) for the free end of the output shaft (10), the output shaft (10) having a cone (12) and a threaded stem (14), and the protective cap (16) possessing on the outwardly pointing end face an orifice (40) which has adjoining it radially outwards a collar (24) which forms a shoulder for a radially acting sealing ring (26), while the opposite shoulder is formed by a bush (30) inserted into the protective cap (16) and fastened in the protective cap (16), **characterized in that** the length (32) of the bush (30) is greater than the cone (12) together with the threaded stem (14).

2. Device according to Claim 1, **characterized in that** the bush (30) has a guide bush (34) and a first bush (28), the guide bush (34) being arranged at a distance (36) from the first bush (28), and the selected distance (36) being such that the distance between the end faces of the first bush (28) which face away from one another and the guide bush (34) is greater than the length of the cone (12) together with the threaded stem (14).

3. Device according to Claim 2, **characterized in that** the guide bush (34) is connected in one piece to the first bush (28) via longitudinal webs (38).

4. Device according to Claim 3, **characterized in that** the longitudinal webs (38) terminate flush with the inner circumference of the first bush (28) and of the guide bush (34).

## Revendications

1. Dispositif comprenant un arbre de sortie (10) et un capot de protection (16) pour l'extrémité libre de l'arbre de sortie (10), l'arbre de sortie (10) présentant un cône (12) et un tourillon fileté (14), et le capuchon de protection (16) possédant une ouverture (40) au niveau du côté frontal tourné vers l'extérieur, à laquelle ouverture se raccorde radialement vers l'extérieur un collet (24) qui forme un épaulement pour une bague d'étanchéité (26) agissant radialement, tandis que l'épaulement opposé est formé par une douille (30) insérée dans le capuchon de protection (16), laquelle douille est fixée dans le capuchon de protection (16), **caractérisé en ce que** la longueur (32) de la douille (30) est plus longue que le cône (12) avec le tourillon fileté (14).

2. Dispositif selon la revendication 1, **caractérisé en ce que** la douille (30) présente une douille de guidage (34) et une première douille (28), la douille de guidage (34) étant disposée à une distance (36) de la première douille (28), et la distance étant choisie de telle sorte que la distance entre les côtés frontaux opposés l'un à l'autre de la première douille (28) et de la douille de guidage (34) soit supérieure à la longueur du cône (12) avec le tourillon fileté (14).

3. Dispositif selon la revendication 2, **caractérisé en ce que** la douille de guidage (34) est connectée d'une seule pièce par le biais de nervures longitudinales (38) à la première douille (28).

4. Dispositif selon la revendication 3, **caractérisé en ce que** les nervures longitudinales (38) se terminent en affleurement avec la périphérie intérieure de la première douille (28) et de la douille de guidage (34).
